Europäisches Patentamt

European Patent Office

Office européen des brevets

(19)

(11) Veröffentlichungsnummer: **0 350 596 B1**

## (12) EUROPÄISCHE PATENTSCHRIFT

(45) Veröffentlichungstag der Patentschrift: **30.12.92**

(51) Int. Cl.⁵: **F16K 5/00**

(21) Anmeldenummer: **89108825.4**

(22) Anmeldetag: **17.05.89**

(54) **Vorrichtung zum Begrenzen und Justieren des Schaltweges bei Armaturen.**

(30) Priorität: **13.07.88 DE 3823718**

(43) Veröffentlichungstag der Anmeldung:
**17.01.90 Patentblatt 90/03**

(45) Bekanntmachung des Hinweises auf die
Patenterteilung:
**30.12.92 Patentblatt 92/53**

(84) Benannte Vertragsstaaten:
**AT BE CH DE FR GB IT LI LU NL**

(56) Entgegenhaltungen:
DE-A- 2 233 841          DE-B- 1 047 733
FR-A- 2 053 822          FR-A- 2 098 582
FR-A- 2 168 677          US-A- 3 687 414

DIN-ISO 5211, Teile 1 und 2, Oktober 1982

"Antriebe - AX90 Pneumatischer Antrieb",
März 1989, Chemat GmbH, Düsseldorf

(73) Patentinhaber: **CHEMAT GmbH Armaturen für
Industrie- und Nuklearanlagen
Carl-Benz-Strasse 4
W-7592 Renchen(DE)**

(72) Erfinder: **Kraft, Gerd
Bahnhofstrasse 31
W-7523 Graben-Neudorf 1(DE)**
Erfinder: **Neumann, Klaus-Dieter
Ahornallee 8
W-7592 Renchen(DE)**

(74) Vertreter: **Betten & Resch
Reichenbachstrasse 19
W-8000 München 5(DE)**

**Beschreibung**

Die Erfindung betrifft eine Vorrichtung zum Begrenzen und Justieren des Schaltweges des Schaltorgans einer durch eine Antriebseinheit angetriebenen Armatur, gemäß dem Oberbegriff des Patentanspruchs 1.

Werden Armaturen, deren Schaltorgan zwischen der Öffnungs- und der Schließposition um 90° schaltbar sind, automatisiert, so wählt man entweder pneumatische, elektrische oder hydraulische 90° schaltbare Antriebe. Diese Antriebe werden unter Zuhilfenahme von diversen Zwischenbauteilen, die die Verbindung zwischen Antrieb und Armatur herstellen, an der Armatur montiert, wobei die Antriebswelle des Antriebes mit der Antriebswelle der Armatur ggf. unter Zwischenschaltung von Kupplungsstücken antriebsmäßig verbunden wird. Bei elektrischen Antrieben wird der 90°-Schaltweg mittels mechanischer und/oder elektrischer Endschalter justiert. Bei pneumatischen Antrieben können je nach Bauart solche Endlagen-Positionierungen gegen Aufpreis mitgeliefert werden oder sie sind teilweise bereits im Gehäuse der Antriebseinheit integriert.

Durch die Justierung der Endpositionen des Schaltweges soll erreicht werden, daß beispielsweise bei Kugelhähnen oder Absperrklappen eine exakte Schließposition bzw. Öffnungsposition eingestellt werden kann.

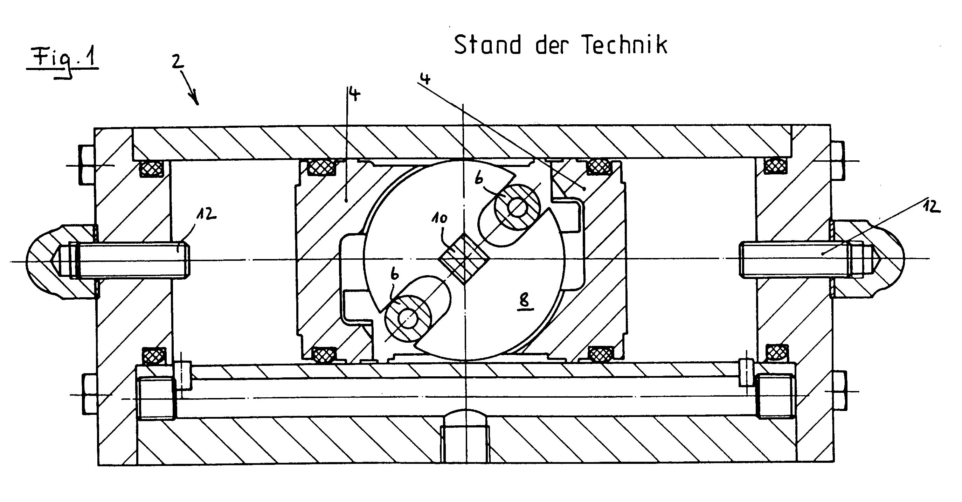

Zum Justieren des Schaltweges des Schaltorgans der Armatur ist es bekannt, den Weg der Antriebskolben der Antriebseinheit mittels Justierschrauben mehr oder weniger zu begrenzen, vgl. Fig. 1, die den bekannten Stand der Technik zeigt. Hierbei ist es beispielsweise möglich, den Schaltweg des Schaltorgans zwischen 88° und 92° zu variieren. Wie aus Fig. 1 ersichtlich, ist bei einer solchen bekannten Anordnung jedoch nur eine Begrenzung der äußeren Endlagen der Antriebskolben möglich, so daß bei einer solchen Anordnung jeweils nur ein Ende des Schaltweges des Schaltorgans justiert werden kann, d.h. es kann nur entweder die Öffnungsposition oder die Schließposition des Schaltorgans einjustiert werden.

Des weiteren ergibt sich eine gewisse Problematik dadurch, daß bei verschiedenen Fabrikaten von Antriebseinheiten aufgrund ihrer Konstruktion die vorstehend diskutierte Kolben-Endlagenbegrenzung nur unter nicht unerheblichem technischen Aufwand realisiert werden kann und daher nur mit erheblichem Mehrpreis angeboten werden kann.

In der Praxis wird bei Antriebseinheiten, bei denen eine Endlagenpositionierung nur gegen Aufpreis angeboten wird, auf eine solche Endlagenpositionierung in der Regel verzichtet, wobei die Antriebseinheiten ohne eine solche Endlagenpositionierung aufgebaut werden. Die mehr oder weniger genaue Öffnungs- und Schließposition des Schaltorgans wird in einem solchen Fall durch aufwendige Montagemaßnahmen erreicht. Die Problematik eines solchen Verfahrens ist darin zu sehen, daß bei nachträglichen Reparaturen der Armatureneinheit die exakte Öffnungs- und Schließposition des Schaltorgans in der Regel nicht mehr gefunden werden kann. Muß dann beispielsweise aus Reparaturgründen die Antriebseinheit ausgetauscht werden, so ist in diesem Fall in der Regel auch die Armatur zur Justierung des neuen Antriebes auszubauen, was arbeitsaufwendig ist und zu unerwünschten Betriebsunterbrechungen führt.

Aus der FR-A-2098582 ist eine Armatur mit einer gattungsgemäßen Vorrichtung zum Begrenzen und Justieren des Schaltweges des Schaltorgans der Armatur bekannt, bei der ein Justierring koaxial auf die Schaltwelle aufsetzbar und an dieser in der gewünschten Ausrichtung fixierbar ist; am Justierring sind zwei Anschlagnasen ausgebildet, in deren Bewegungsweg ein am Armaturengehäuse befestigbarer Anschlagstift ragt, wodurch zwei Endpositionen für die Schaltwelle definiert werden.

Der vorliegenden Erfindung liegt in erster Linie die Aufgabe zugrunde, eine Vorrichtung der eingangs genannten Art zu schaffen, die universell einsetzbar ist, einen einfachen Aufbau aufweist, zuverlässig arbeitet und kostengünstig ist. Des weiteren soll die erfindungsgemäße Vorrichtung vorzugsweise ein Justieren beider Endpositionen des Schaltorgans, also sowohl der Öffnungsposition als auch der Schließposition, ermöglichen.

Diese Aufgabe wird erfindungsgemäß im wesentlichen durch die im Kennzeichen des Patentanspruchs 1 angegebenen Maßnahmen gelöst. Die justierbaren Anschläge wirken hierbei zwischen dem ortsfesten Körper, der beispielsweise plattenförmig ausgebildet sein kann, und der relativ hierzu drehbaren Welle, indem an der Welle geeignete Anschlagsflächen für Justierelemente ausgebildet werden. Ein wesentlicher Vorteil einer solchen Anordnung besteht darin, daß bei Reparaturmaßnahmen an der Antriebseinheit oder beim Austauschen der Antriebseinheit die vorgenommene Justierung des Schaltweges des Schaltorgans der Armatur erhalten bleibt, nachdem das Zwischenteil nicht abgenommen werden muß. Im Gegensatz zu der eingangs genannten Endlagenpositionierung der Antriebskolben der Antriebseinheit weist die erfindungsgemäße Anordnung den weiteren Vorteil auf, daß die Anschläge im Falle der vorliegenden Erfindung wesentlich direkter an der Armatur sitzen, so daß ein möglicherweise vorhandenes Spiel bei der Bewegungsübertragung im Antriebsbereich die Armaturenposition nicht beeinflußt. Geeignete Maßnahmen wie beispielsweise gehärtete Justierschrauben und Endanschlüsse mit Stellitpanzerung vermeiden jeglichen Verschleiß. Dagegen unterliegen im Falle des bekannten Standes der Technik die Aufprallflächen innerhalb der Antriebseinheit bei dem dort üblichen Aluminium einem dauernden Verschleiß.

Ein weiterer Vorteil der erfindungsgemäßen Anordnung liegt darin, daß an oder in den Antriebseinheiten selbst keine Maßnahmen zur Endlagenbegrenzung vorgesehen werden müssen. Wenn der im wesentlichen plattenförmig ausgebildete Körper des Zwischenbauteils in bevorzugter Weiterbildung der Erfindung nach DIN/ISO 5211 ausgebildet ist, so kann die erfindungsgemäße Vorrichtung praktisch für jedes Antriebsfabrikat verwendet werden.

In vorteilhafter Weiterbildung der Erfindung ist vorgesehen, daß das Zwischenbauteil mindestens ein in axialer Richtung einstellbares Justierelement umfaßt, das im Körper in einer zur Welle im wesentlichen senkrechten Ebene angeordnet ist, von außerhalb des Körpers betätigbar ist und mit seinem nach innen ragenden Ende mit einer an der drehbaren Welle ausgebildeten Anschlagsfläche zusammenwirkt. In konstruktiv besonders einfacher Weise können die Justierelemente von Stellschrauben gebildet sein, wobei die eingestellten Positionen der Stellschrauben vorzugsweise mittels Kontermuttern fixierbar sind.

In bevorzugter Weiterbildung der Erfindung ist vorgesehen, daß mindestens ein weiteres Justierelement und eine weitere Anschlagsfläche vorgesehen sind, wobei eines der Justierelemente mit der ihm zugeordneten Anschlagsfläche die Öffnungsposition und ein weiteres der Justierelemente mit der ihm zugeordneten Anschlagsfläche die Schließposition des Schaltorgans definiert. Die erfindungsgemäße Vorrichtung gestattet somit in einfachster Weise das Justieren beider Endpositionen des Schaltorgans.

In bevorzugter Weiterbildung der Erfindung ist vorgesehen, daß zumindest für eine der Endpositionen (Öffnungsposition bzw. Schließposition) zwei Justierelemente vorgesehen sind, wobei die entsprechenden Anschlagsflächen an der Welle ebenso wie die beiden Justierelemente bezüglich der Welle in etwa diametral gegenüberliegend ausgebildet sind. Hierdurch wird erreicht, daß in der Anschlagsposition symmetrische, sich ausgleichende Anschlags- bzw. Haltekräfte auf die Welle bzw. das Schaltorgan einwirken.

Die Anschläge sind zweckmäßigerweise derart ausgebildet, daß sich die mindestens eine Anschlagsfläche in etwa in einer zur Achse der Welle parallelen Ebene erstreckt und daß sich das der Anschlagsfläche zugeordnete Justierelement im wesentlichen senkrecht zu dieser Ebene erstreckt. Hierdurch ergeben sich besonders günstige Kraftübertragungsverhältnisse.

In vorteilhafter Weise ist der im wesentlichen plattenförmig ausgebildete Körper des Zwischenbauteils mittels Schraubbolzen auf die Armatur aufflanschbar und die Antriebseinheit ist mittels Schraubbolzen auf das Zwischenbauteil aufflanschbar. Wie bereits erwähnt, ist das Zwischenbauteil vorzugsweise nach DIN/ISO 5211 ausgebildet, so daß es im wesentlichen für sämtliche gängige, auf dem Markt befindliche Armaturen bzw. Antriebseinheiten verwendbar ist.

Ein besonders einfacher Aufbau des Zwischenbauteils und eine besonders direkte Kraftübertragung zwischen Antriebseinheit und Armatur ergibt sich dann, wenn in bevorzugter Weiterbildung der Erfindung im eingebauten Zustand des Zwischenbauteils die Welle des Zwischenbauteils koaxial zur Antriebswelle der Antriebseinheit und zur Drehachse des Schaltorgans angeordnet ist, wobei die Montage des Zwischenbauteils dann besonders einfach und schnell durchgeführt werden kann, wenn zweckmäßigerweise die drehbare Welle einerseits auf bzw. in das Schaltorgan der Armatur und andererseits auf bzw. in die Antriebswelle der Antriebseinheit auf- bzw. einsteckbar ist, wodurch aufgrund geeigneter Profilierung die miteinander in Eingriff kommenden Teile (üblicherweise quadratischer Querschnitt) der Antriebseinheit und des Schaltorgans der Armatur antriebsmäßig drehfest miteinander verbunden sind.

Im Falle von mindestens zwei Justierelementen kann es zweckmäßig sein, wenn sich zwei bzw. je zwei Justierelemente kreuzen und in bezüglich der Wellenachse beabstandeten Ebenen angeordnet sind; eine solche Anordnung wird insbesondere dann getroffen werden, wenn insgesamt vier Justierelemente vorgesehen sind, nämlich je zwei für die Öffnungs- und die Schließposition.

Der Anschlag kann im einzelnen derart ausgebildet sein, daß an der drehbaren Welle zumindest eine sich im wesentlichen radial nach außen erstreckende Anschlagsnase ausgebildet ist, die im Falle von 90° schaltbaren Armaturen diametral gegenüberliegend angeordnet sind. Die eine seitliche Anschlagsfläche einer jeden Anschlagsnase wirkt hierbei jeweils mit einem die Schließposition definierenden Justierelement und die andere, gegenüberliegende seitliche Anschlagsfläche einer jeden Anschlagsnase mit je einem die Öffnungsposition definierenden Anschlagselement zusammen.

Die drehbare wolle des Zwischenbauteils kann im Körper des Zwischenbauteils drehbar gelagert sein, vorzugsweise wird auf eine solche Lagerung jedoch verzichtet, da die drehbare Welle im eingebauten Zustand zwischen der Antriebswelle der Antriebseinheit und einer entsprechenden Welle des Schaltorgans der Armatur ohnehin festgehalten ist.

Die erfindungsgemäße Vorrichtung zeichnet sich insbesondere durch einfachen Aufbau aus, nachdem sie lediglich aus der mit den Anschlagsflächen versehenen drehbaren Welle und dem plattenförmigen, mit den Justierschrauben versehenen Körper besteht. Die erfindungsgemäße Vorrichtung kann äußerst einfach montiert werden, indem lediglich die drehbare Welle auf die Armatur aufgesteckt und der plattenförmige Körper auf die Armatur aufgeflanscht werden müssen; anschließend kann die Antriebseinheit auf das Zwischenbauteil aufgeflanscht werden. Die erfindungsgemäße Vorrichtung zeichnet sich weiterhin dadurch aus, daß mit einfachsten Mitteln sowohl die Öffnungs- als auch die Schließposition der Armatur eingestellt werden können, und zwar durch einfaches Drehen von von außen jederzeit zugänglichen Justierschrauben; zusätzliche Maßnahmen an den Antriebseinheiten sind nicht erforderlich.

Weitere vorteilhafte Merkmale der Erfindung ergeben sich aus den Ansprüchen im Zusammenhang mit der nachfolgenden Beschreibung, in der ein bevorzugtes Ausführungsbeispiel der Erfindung anhand der Zeichnung näher beschrieben wird. In der Zeichnung zeigen:

Fig. 1    einen Schnitt durch eine Antriebseinheit mit Justierschrauben gemäß dem Stand der Technik für eine Armatur,

Fig. 2    eine Draufsicht auf das erfindungsgemäße Zwischenbauteil, teilweise in aufgebrochener Darstellung, und

Fig. 3    eine Seitenansicht auf das Zwischenbauteil gemäß Fig. 2.

Mit der in Fig. 1 dargestellten, pneumatisch arbeitenden Antriebseinheit 2 gemäß dem Stand der Technik wird die Linearbewegung der Antriebskolben 4 über an diesen gelagerte Rollen 6 in eine Drehbewegung des Drehgliedes 8 umgewandelt, welches beispielsweise über eine Vierkantwelle 10 diese Drehbewegung auf das Schaltorgan einer nicht dargestellten Armatur wie beispielsweise eines Kugelhahns, eines Kükenhahns, einer Absperrklappe od. dgl. überträgt. Die in Fig. 1 dargestellte innenliegende Position der Antriebskolben 4 definiert die eine Endstellung des Schaltorgans, also beispielsweise die Schließstellung des Kükens, während die außenliegende Position der Antriebskolben 4 die andere Endstellung des Schaltorgans, also beispielsweise die Öffnungsstellung definiert. Mittels justierbaren Stellschrauben 12, welche den Hubweg der Antriebskolben 4 in ihrer Außenposition begrenzen, ist die Öffnungsposition des Schaltorgans der Armatur justierbar.

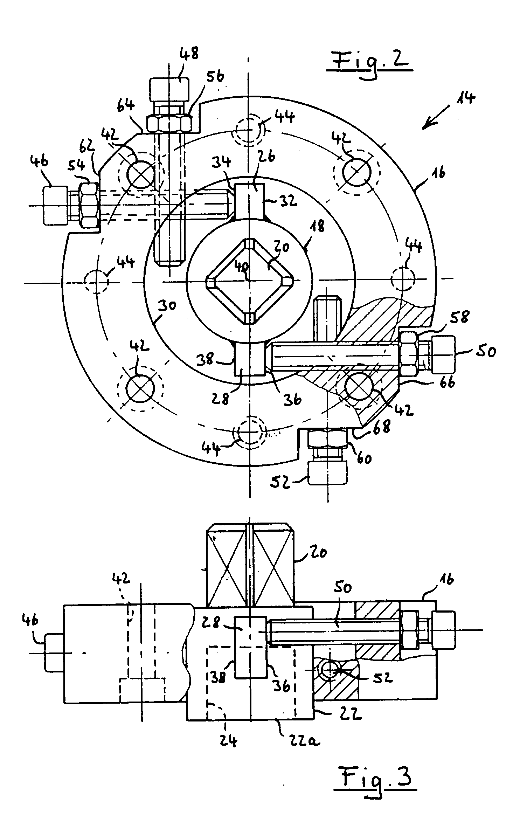

Das erfindungsgemäße, in den Fig. 2 und 3 dargestellte Zwischenbauteil, welches insgesamt mit der Bezugsziffer 14 bezeichnet ist, wird zwischen eine nicht dargestellte Armatur und eine diese antreibende, beispielsweise pneumatisch oder hydraulisch arbeitende Antriebseinheit plaziert, die beispielsweise ähnlich derjenigen gemäß Fig. 1 (jedoch ohne Stellschrauben) aufgebaut sein kann.

Das Zwischenbauteil 14 setzt sich aus einem plattenartigen, kreisringförmigen Flansch 16 und einer im Zentrum des Flansches 16 angeordneten, als Kupplungsstück zwischen der Antriebswelle der Antriebseinheit 2 und dem Schaltorgan der Armatur dienenden Welle 18 zusammen. Die als Kupplungsstück dienende Welle 18 weist in axialer Richtung gesehen einen ersten, vierkantförmig ausgebildeten Abschnitt 20 auf, der in eine entsprechend geformte Vertiefung des Antriebselements der Antriebseinheit einsteckbar ist und mit dieser somit verschieblich, aber drehfest zusammenwirkt. Ein zweiter, unterhalb des Abschnitts 20 angeordneter Abschnitt 22 der Welle 18 ist im wesentlichen zylindrisch ausgebildet und weist eine zu seiner Unterseite 22a hin geöffnete, axiale Ausnehmung 24 ebenfalls im wesentlichen quadratischen Querschnitts auf, wobei die Welle 18 über diese Ausnehmung 24 auf einen entsprechend geformten, als Vierkant ausgebildeten Antriebsbolzen des Schaltorgans einer Armatur aufsteckbar ist. Im eingebauten Zustand des Zwischenbauteils 14 dient die Welle 18 somit als Kupplungsstück zwischen dem Antrieb der Antriebseinheit und dem anzutreibenden Organ der Armatur.

An diametral gegenüberliegenden Seiten des zylindrischen Abschnitts 22 der Welle 18 sind zwei Anschlagsnasen 26, 28 ausgebildet, die sich radial nach außen erstrecken, von der Innenseite 30 des Flansches 16 jedoch beabstandet sind, wobei die Ausdehnung der Anschlagsnasen 26, 28 in Axialrichtung derart bemessen ist, daß die Anschlagsnasen für beide Paare von in unterschiedlichen Ebenen angeordneten Justierelementen wirksam sind, wie weiter unten noch im einzelnen beschrieben werden wird. Eine jede Anschlagsnase weist zwei seitliche, jeweils voneinander weg weisende Anschlagsflächen 32, 34 bzw. 36, 38 auf, wobei eine jede Anschlagsfläche 32 bis 38 zu einer durch die Achse 40 des Zwischenbauteils 14 verlaufende Ebene parallel ist.

Am Flansch 16 sind mehrere, in Richtung der Achse 40 des Zwischenbauteils 14 verlaufende Bohrungen unter gleichen Abständen verteilt angeordnet, wobei die Bohrungen 44 zum Aufflanschen des Flansches 16 auf die nicht dargestellte Armatur mittels ebenfalls nicht dargestellter Bolzen dienen und die Bohrungen 42 zum Aufflanschen der nicht dargestellten Antriebseinheit auf den Flansch 16 mittels ebenfalls nicht dargestellter Schraubbolzen.

Im Flansch 16 sind vier Stellschrauben 46, 48, 50 und 52 über entsprechende, im Flansch 16 ausgebildete Innengewinde verstellbar gehalten. Die Stellschrauben 46 bis 52 sind in zur Achse 40 des Zwischenbauteils 14 senkrechten Ebenen angeordnet. Die Stellschrauben 48, 50 sind in einer ersten, oben liegenden Ebene angeordnet, die Stellschrauben 46, 52 in einer zweiten, unten liegenden Ebene. Die Stellschrauben 46, 50 verlaufen zueinander parallel, jedoch entgegengesetzt gerichtet, wobei die Stellschrauben 48, 52 ebenfalls zueinander parallel verlaufen, einander entgegengerichtet sind und zu den Stellschrauben 46, 50 jeweils rechtwinklig verlaufen. Die Stellschrauben 46 und 48 bzw. 50 und 52 kreuzen sich daher unter jeweils rechtem Winkel in unterschiedlichen Ebenen.

Die Stellschrauben 46 bis 52 sind jeweils im wesentlichen rechtwinklig zu den dazugehörigen Anschlagsflächen 32 bis 38 in deren jeweiliger Anschlagsposition angeordnet. Die Stellschraube 46 ist der Anschlagsfläche 34, die Stellschraube 48 der Anschlagsfläche 38, die Stellschraube 50 der Anschlagsfläche 36 und die Stellschraube 52 der Anschlagsfläche 32 zugeordnet. In der in den Fig. 2 und 3 dargestellten Position der Welle 18, welche beispielsweise die Schließposition definiert, schlägt die Anschlagsfläche 34 am Anschlagsende der Stellschraube 46 und die Anschlagsfläche 36 am Anschlagsende der Stellschraube 50 an. Dementsprechend schlägt in der Öffnungsposition die Anschlagsfläche 32 am Anschlagsende der Stellschraube 52 und die Anschlagsfläche 38 am Anschlagsende der Stellschraube 48 an. Zwischen diesen beiden Endpositionen kann die Welle 18 eine Drehung von etwa 90° vollführen, wobei das genaue Maß dieser Drehung durch Justieren der Stellschrauben 46 bis 52 möglich ist. Es versteht sich, daß für jede der Endpositionen jeweils zwei Stellschrauben 46, 50 bzw. 48, 52 gemeinsam einjustiert werden, so daß der Anschlag an jeweils zwei diametral gegenüberliegenden Anschlagsflächen gemeinsam erfolgt.

Die jeweils eingestellte Sollposition der Stellschrauben 46 bis 52 ist mittels Kontermuttern 54 bis 60 arretierbar. Im Bereich der Stellschrauben 46 bis 52 sind an der Außenseite des Flansches 16 rechtwinklige Ausnehmungen 62 bis 68 ausgebildet, deren eine Seite senkrecht zu den jeweiligen Stellschrauben verläuft, um geeignete Anlageflächen für die Kontermuttern zu schaffen.

Mit der erfindungsgemäßen Vorrichtung ist es nunmehr auch möglich, einfach wirkende, d.h. mit Federkraft schließende Armaturen in derjenigen Position, in der die Antriebskolben der Antriebseinheit innenliegend sind, exakt zu justieren, was bei Präzisionsarmaturen wie z.B. metallisch dichtenden Klappen unerläßlich ist.

Es ist noch darauf hinzuweisen, daß das erfindungsgemäße Zwischenbauteil auch im Zusammenhang mit einigen Bauarten von Mehrwege-Armaturen verwendet werden kann, so insbesondere bei einem 3-Wege-Kugelhahn mit 90°-Schaltung und mit einer Kugel mit L-Bohrung.

**Patentansprüche**

1. Vorrichtung (14) zum Begrenzen und Justieren des Schaltweges des Schaltorgans einer durch eine Antriebseinheit angetriebenen Armatur, insbesondere Absperr- oder Regelarmatur wie Kugelhahn, Kükenhahn, Absperrklappe und dergleichen, bei der das Schaltorgan zwischen einer Öffnungsposition und einer Schließposition um weniger als 360 °, in der Regel um etwa 90 ° drehbar ist, wobei die Vorrichtung (14) lösbar im Bereich von Armatur und Antriebseinheit anordenbar ist und justierbare Anschläge (26,28;46,48,50,52) aufweist,

   dadurch gekennzeichnet, daß

   die Vorrichtung als zwischen Armatur und Antriebseinheit anordenbares Zwischenbauteil (14) ausgebildet ist und einen, insbesondere mit dem Gehäuse der Armatur und der Antriebseinheit verbindbaren, ortsfesten Körper (16) sowie eine in diesem angeordnete drehbare Welle (18) aufweist, die einerseits mit dem Schaltorgan der Armatur und andererseits mit der Abtriebswelle der Antriebseinheit kuppelbar ist (bei 20 und 24), wobei die justierbaren Anschläge (26,28;46,48,50,52) zwischen der Welle (18) und dem ortsfesten Körper (16) ausgebildet sind.

2. Vorrichtung nach Anspruch 1, dadurch gekennzeichnet, daß das Zwischenbauteil (14) mindestens ein linear verstellbares Justierelement (46,48,50,52) umfaßt, das im Körper (16) in einer zur Welle (18) im wesentlichen senkrechten Ebene angeordnet ist, von außerhalb des Körpers (16) betätigbar ist und mit seinem nach innen ragenden Ende mit einer an der drehbaren Welle (18) ausgebildeten Anschlagsfläche (32 34,36,38) zusammenwirkt.

3. Vorrichtung nach Anspruch 2, dadurch gekennzeichnet, daß mindestens ein weiteres Justierelement (46,48,50,52) und eine weitere Anschlagsfläche (32,34,36,38) vorgesehen sind, wobei eines der Justierelemente (48, 52) mit der ihm zugeordneten Anschlagsfläche (38, 32) die Öffnungsposition und ein weiteres der Justierelemente (46, 50) mit der ihm zugeordneten Anschlagsfläche (34, 36) die Schließposition des Schaltorgans definiert.

4. Vorrichtung nach Anspruch 2 oder 3, dadurch gekennzeichnet, daß zumindest für eine der Schaltweg-Endpositionen (Öffnungsposition bzw. Schließposition) zwei Justierelemente (48 und 52 bzw. 46 und 50) vorgesehen sind, wobei die entsprechenden Anschlagsflächen an der Welle (18) ebenso wie die beiden Justierelemente bezüglich der Welle in etwa diametral gegenüberliegend ausgebildet sind.

5. Vorrichtung nach einem der Ansprüche 2 bis 4, dadurch gekennzeichnet daß sich die mindestens eine Anschlagsfläche (32,34,36,38) in etwa in einer zur Achse (40) der Welle (18) parallelen Ebene erstreckt und daß sich das der Anschlagsfläche zugeordnete Justierelement (46,48,50,52) im wesentlichen senkrecht zu dieser Ebene erstreckt.

6. Vorrichtung nach einem der Ansprüche 2 bis 5, dadurch gekennzeichnet, daß die Justierelemente von Stellschrauben (46,48,50,52) gebildet sind.

7. Vorrichtung nach Anspruch 6, dadurch gekennzeichnet, daß die eingestellten Positionen der Stellschrauben (46,48,50,52) beispielsweise mittels Kontermuttern (54,56,58,60) fixierbar sind.

8. Vorrichtung nach einem der vorhergehenden Ansprüche, dadurch gekennzeichnet, daß der im wesentlichen plattenförmig ausgebildete Körper (16) des Zwischenbauteils (14) insbesondere mittels Schraubbolzen an die Armatur anflanschbar ist und daß die Antriebseinheit insbesondere mittels Schraubbolzen an den plattenförmigen Körper (16) des Zwischenbauteils (14) anflanschbar ist.

9. Vorrichtung nach Anspruch 8, dadurch gekennzeichnet, daß der Körper (16) des Zwischenbauteils (14) als Flansch nach DIN/ISO 5211 ausgebildet ist.

10. Vorrichtung nach einem der vorhergehenden Ansprüche, dadurch gekennzeichnet, daß im eingebauten Zustand des Zwischenbauteils (14) die Welle (18) des Zwischenbauteils (14) koaxial zur Antriebswelle der Antriebseinheit und zur Drehachse des Schaltorgans angeordnet ist.

11. Vorrichtung nach einem der vorhergehenden Ansprüche, dadurch gekennzeichnet, daß die drehbare Welle (18) einerseits auf bzw. in das Schaltorgan der Armatur und andererseits auf bzw. in die Antriebswelle der Antriebseinheit auf- bzw. einsteckbar ist, wodurch aufgrund geeigneter Profilierung der miteinander in Eingriff kommenden Teile Antriebseinheit und Schaltorgan der Armatur antriebsmäßig miteinander verbindbar sind .

12. Vorrichtung nach einem der Ansprüche 2 bis 11, dadurch gekennzeichnet, daß im Falle von mehreren Justierelementen (46,48,50,52) sich zwei oder je zwei Justierelemente (46, 48 bzw. 50, 52) kreuzen und in beabstandeten Ebenen angeordnet sind.

13. Vorrichtung nach einem der Ansprüche 2 bis 12, dadurch gekennzeichnet, daß an der drehbaren Welle (18) zumindest eine sich im wesentlichen radial nach außen erstreckende Anschlagsnase (26, 28) ausgebildet ist.

14. Vorrichtung nach Anspruch 13, dadurch gekennzeichnet, daß zwei sich diametral gegenüberliegende Anschlagsnasen (26, 28) ausgebildet sind.

15. Vorrichtung nach Anspruch 14, dadurch gekennzeichnet, daß die eine seitliche Anschlagsfläche (34, 36) einer jeden Anschlagsnase (26, 28) mit je einem die Schließposition definierenden Justierelement (46, 50) und die andere, gegenüberliegende seitliche Anschlagsfläche (32 bzw. 38) einer jeden Anschlagsnase (26, 28) mit je einem die Öffnungsposition definierenden Justierelement (52, 48) zusammenwirkt.

**Claims**

1. Device (14) for limiting and adjusting the switching travel of the switching member of a fitting driven by a drive unit, in particular of a shut-off fitting or a control fitting such as a ball cock, a tap cock, a shut-off valve and the like, in which the switching member is rotatable by less than 360°, generally by about 90°, between an opening position and a closing position, the device (14) being detachably disposable in the area of the fitting and the drive unit and exhibiting adjustable stops (26, 28; 46, 48, 50, 52), characterised in that the device is formed as an intermediate component (14), disposable between the fitting and the drive unit, and exhibits a fixed body (16), which is connectable, in particular, to the housing of the fitting and the drive unit, and a rotatable shaft (18), which is rotatably disposed in the said fixed body and which can be coupled (at 20 and 24), on the one hand, with the switching member of the fitting and, on the other hand, with the drive shaft of the drive unit, the adjustable stops (26, 28; 46, 48, 50, 52) being formed between the shaft (18) and the fixed body (16).

2. Device according to Claim 1, characterised in that the intermediate component (14) comprises at least one linearly adjustable adjusting element (46, 48, 50, 52), which is disposed in the body (16) in a plane running essentially perpendicularly to the shaft (18), can be actuated from outside the body (16) and interacts, by its inwardly projecting end, with a stop face (32, 34, 36, 38) formed on the rotatable shaft (18).

3. Device according to Claim 2, characterised in that at least one further adjusting element (46, 48, 50, 52) and one further stop face (32, 34, 36, 38) are provided, one of the adjusting elements (48, 52) defining with its assigned stop face (38, 32) the opening position and one other of the adjusting elements (46, 50) defining with its assigned stop face (34, 36) the closing position of the switching member.

4. Device according to Claim 2 or 3, characterised in that, at least for one of the switching travel-end positions (opening position or closing position), two adjusting elements (48 and 52 or 46 and 50) are provided, the corresponding stop faces on the shaft (18) as well as the two adjusting elements being formed to be approximately diametrically opposed in relation to the shaft.

5. Device according to one of Claims 2 to 4, characterised in that the at least one stop face (32, 34, 36, 38) extends approximately in a plane running parallel to the axis (40) of the shaft (18) and in that the adjusting element (46, 48, 50, 52) assigned to the stop face extends essentially perpendicularly to this plane.

6. Device according to one of Claims 2 to 5, characterised in that the adjusting elements are formed by set screws (46, 48, 50, 52).

7. Device according to Claim 6, characterised in that the adjusted positions of the set screws (46, 48, 50, 52) can be fixed, for example, by means of check nuts (54, 56, 58, 60).

8. Device according to one of the preceding claims, characterised in that the essentially plate-shaped body (16) of the intermediate component (14) can be flanged, in particular by means of screw bolts, to the fitting and in that the drive unit can be flanged, in particular by means of screw bolts, to the plate-shaped body (16) of the intermediate component (14).

9. Device according to Claim 8, characterised in that the body (16) of the intermediate component (14) is formed as a flange according to DIN/ISO 5211.

10. Device according to one of the preceding claims, characterised in that, in the installed state of the intermediate component (14), the shaft (18) of the intermediate component (14) is disposed coaxially to the drive shaft of the drive unit and to the rotational axis of the switching member.

11. Device according to one of the preceding claims, characterised in that the rotatable shaft (18) can be fitted, on the one hand, onto or into the switching member of the fitting and, on the other hand, onto or into the drive shaft of the drive unit, as a result of which, due to suitable profiling of the mutually engaging parts, the drive unit and the switching member of the fitting can be drive-connected to each other.

12. Device according to one of Claims 2 to 11, characterised in that, in the case of a plurality of adjusting elements (46, 48, 50, 52), two or two adjusting elements each (46, 48 or 50, 52) intersect and are disposed in spaced-apart planes.

13. Device according to one of Claims 2 to 12, characterised in that on the rotatable shaft (18) there is formed at least one stop boss (26, 28), extending essentially radially outwards.

14. Device according to Claim 13, characterised in that two diametrically opposed stop bosses (26, 28) are formed.

15. Device according to Claim 14, characterised in that the one lateral stop face (34, 36) of each stop boss (26, 28) interacts in each case with an adjusting element (46, 50) defining the closing position and the other, opposite-facing, lateral stop face (32 or 38) of each stop boss (26, 28) interacts in each case with an adjusting element (52, 48) defining the opening position.

**Revendications**

1. Dispositif (14) pour limiter et ajuster la course de commutation de l'organe contacteur d'une armature entraînée par une unité d'entraînement, en particulier une armature d'isolement ou de réglage, telle qu'un robinet à boisseau sphérique, un robinet à boisseau, un clapet d'isolement et analogues, dans lequel l'organe contacteur est susceptible de tourner, entre une position d'ouverture et une position de fermeture, d'un angle inférieur à 360 degrés, en règle générale d'à peu près 90 degrés, le dispositif (14) étant susceptible d'être disposé amovible dans la zone de l'armature et de l'unité d'armature et présentant des butées ajustables (26,28;46,48, 50, 52), caractérisé en ce que le dispositif est réalisé sous forme d'éléments de construction intermédiaire (14), susceptible d'être disposé entre l'armature et l'unité d'entraînement, et présente un corps fixe (16), en particulier susceptible d'être relié au carter de l'armature et de l'unité d'entraînement, ainsi qu'un arbre rotatif (18) disposé à l'intérieur du corps (16) et susceptible d'être accouplé (en 20 et 24) d'une part à l'organe contacteur de l'armature et d'autre part à l'arbre d'entraînement de l'unité d'entraînement, les butées ajustables (26,28;46,48,50,52) étant réalisées entre l'arbre (18) et le corps fixe (16).

2. Dispositif selon la revendication 1, caractérisé en ce que l'élément de construction intermédiaire (14) comprend au moins un éléments d'ajustement (46,48,50,52) à possibilité de réglage linéaire, disposé dans le corps (16), dans un plan sensiblement perpendiculaire à l'arbre (18), susceptible d'être actionné de l'extérieur du corps (16) et coopérant, par son extrémité pénétrant à l'intérieur, avec une surface de butée (32,34,36) réalisée sur l'arbre rotatif (18).

3. Dispositif selon la revendication 2, caractérisé en ce qu'au moins un autre élément d'ajustement (46,48,50,52) et une autre surface de butée (32,34,36,38) sont prévues, l'un des éléments d'ajustement (48,52) définissant, avec la surface de butée (38,32) lui étant associée, la position d'ouverture et un autre des éléments d'ajustement (46,50) définissant, avec la surface de butée (34,36) lui étant associée, la position de fermeture.

4. Dispositif selon la revendication 2 ou 3, caractérisé en ce qu'au moins pour l'une des positions finales de la course de commutation (respectivement position d'ouverture et position de fermeture) sont prévus deux éléments d'ajustement (respectivement 48 et 52 ou 46 et 50), les surfaces de butées correspondantes sur l'arbre ainsi que les deux éléments d'ajustement étant réalisés pratiquement en opposition diamétrale par rapport à l'arbre.

5. Dispositif selon l'une des revendications 2 à 4, caractérisé en ce que la au moins une surface de butée (32,34,36,38) s'étend à peu près dans un plan parallèle à l'axe (40) de l'arbre (18) et en ce que l'élément d'ajustement (46,48,50,52) associé à la surface de butée s'étend pratiquement perpendiculairement à ce plan.

6. Dispositif selon l'une des revendications 2 à 5, caractérisé en ce que les éléments d'ajustement sont formés par des vis de réglages (46,48,50,52).

7. Dispositif selon la revendication 6, caractérisé en ce que les positions réglées des vis de réglage (46,48,50,52) sont susceptible d'être fixées, par exemple au moyen de contre-écrous (54,56,58,60).

8. Dispositif selon l'une des revendications précédentes, caractérisé en ce que le corps (16), réalisé sensiblement en forme de plaque, de l'élément de construction intermédiaire (14), est susceptible d'être monté par bridage sur l'armature, en particulier au moyen de boulons filetés, et en ce que l'unité d'entraînement est susceptible d'être bridée, en particulier au moyen de boutons filetés, sur le corps (16) en forme de plaque de l'élément de construction intermédiaire (14).

9. Dispositif selon la revendication 8, caractérisé en ce que le corps (16) de l'élément de construction intermédiaire (14) est réalisé sous forme de bride suivant la norme DIN/ISO 5211.

10. Dispositif selon l'une des revendications précédentes, caractérisé en ce qu'à l'état monté de l'élément de construction intermédiaire (14), l'arbre (18) de l'élément de construction intermédiaire (14) est disposé coaxialement par rapport à l'arbre d'entraînement de l'unité d'entraînement et par rapport à l'axe de rotation de l'organe contacteur.

11. Dispositif selon l'une des revendications précédentes, caractérisé en ce que l'arbre rotatif (18) est enfichable sur, respectivement dans, d'une part, sur, respectivement dans l'organe contacteur de l'armature et, d'autre part, sur, respectivement dans l'arbre d'entraînement de l'unité d'entraînement, faisant que du fait d'un profilage approprié des pièces en contact les unes avec les autres, l'unité d'entraînement et l'organe contacteur de l'armature sont susceptible d'être reliés ensemble en entraînement.

12. Dispositif selon l'une des revendications 2 à 11, caractérisé en ce que, dans le cas de plusieurs éléments d'ajustement (46,48,50,52), deux ou des couples de deux éléments d'ajustement (respectivement 46,48 ou 50,52) se croisent et sont disposés dans des plans espacés.

13. Dispositif selon l'une des revendications 2 à 12, caractérisé en ce que au moins un ergot de butée (26,28), s'étendant sensiblement radialement vers l'extérieur, est réalisé sur l'arbre rotatif (18).

14. Dispositif selon la revendication 13, caractérisé en ce que sont réalisés deux ergots de butée (26,28) diamétralement opposés.

15. Dispositif selon la revendication 14, caractérisé en ce qu'une surface de butée latérale (34,36) de chaque ergot de butée (26,28) coopère avec chaque fois un élément d'ajustement (46,50) définissant la position de fermeture et l'autre surface de butée latérale (respectivement 32 ou 38), située à l'opposé, coopère avec chaque fois un élément d'ajustement (52,48) définissant la position d'ouverture.

Stand der Technik

Fig. 1

Fig.2

Fig.3